(19) Europäisches Patentamt
European Patent Office
Office européen des brevets

(11) **EP 1 482 196 B1**

(12) **EUROPÄISCHE PATENTSCHRIFT**

(45) Veröffentlichungstag und Bekanntmachung des Hinweises auf die Patenterteilung:
**27.06.2007 Patentblatt 2007/26**

(51) Int Cl.:
*F16D 48/06* *(2006.01)*

(21) Anmeldenummer: **04010639.5**

(22) Anmeldetag: **05.05.2004**

(54) **Verfahren zur Begründung des Verschleisses einer Reibungskupplung zwischen einem Verbrennungsmotor und einem Schaltgetriebe eines Nutzfahrzeuges**

Method of calculating the wear of a friction clutch situated between a combustion engine and a gearbox in a commercial vehicle

Procédé de calculer l'usure d'un embrayage à friction situé entre un moteur et une boîte de vitesses dans un véhicule utilitaire

(84) Benannte Vertragsstaaten:
**DE FR IT SE**

(30) Priorität: **30.05.2003 DE 10324481**

(43) Veröffentlichungstag der Anmeldung:
**01.12.2004 Patentblatt 2004/49**

(73) Patentinhaber: **MAN Nutzfahrzeuge Aktiengesellschaft**
**80976 München (DE)**

(72) Erfinder: **Drimml, Peter**
**80997 München (DE)**

(56) Entgegenhaltungen:
DE-C- 19 639 296          US-A- 6 152 275
US-B1- 6 470 253

## Beschreibung

Die Erfindung betrifft ein Verfahren zur Begründung des Verschleißes einer Reibungskupplung (Kupplung), die zwischen einem Verbrennungsmotor und einem Schaltgetriebe angeordnet ist. Das genannte Schaltgetriebe kann dabei entweder manuell bedient oder teilautomatisiert geschaltet sein, wobei bei dem teilautomatisierten Schaltgetriebe der Fahrzeugführer den Anfahrgang wählen kann und die Kupplung betätigen muss und bei fahrendem Fahrzeug und Gangwechsel vom Fahrzeugführer der Anschlussgang gewählt wird und die Schaltung dann automatisch durchgeführt wird.

Bei Nutzfahrzeugen können die großen Gewichtsunterschiede zwischen leerem und voll beladenem Fahrzeug sowie die unterschiedlichen Fahrsituationen im Straßen- und Geländeeinsatz zu erheblichen Unterschieden der Belastungen von Kupplungen führen, wenn der Anfahrgang der jeweiligen Fahrsituation und der jeweiligen Beladung des Fahrzeugs nicht korrekt angepasst ist. Weiterhin kann im Fahrbetrieb bei einem Gangwechsel ein nicht passender Anschlussgang gewählt werden. Aus beiden Vorgängen kann ein frühzeitiger Verschleiß der Kupplung des Schaltgetriebes abweichend von der normalen Standzeit einer Kupplung bei korrekter Bedienung des Schaltgetriebes resultieren. Zudem sind, zur Erzielung eines optimierten Ansprechverhaltens und einer optimierten Bedienung der Kupplungen von Nutzfahrzeugen, häufig pneumatisch unterstützte oder weitere unterstützende Hilfseinrichtungen eingerichtet, so dass eine aktuelle Überbelastung der Kupplung dem Fahrer aus dem Fahrverhalten des Fahrzeugs nicht bewusst gemacht wird.

Aufgabe der Erfindung ist es, ein Verfahren darzustellen, das eine Begründung liefert über den Verschleiß einer Reibungskupplung zwischen Motor und Getriebe.

Diese Aufgabe wird erfindungsgemäß durch die kennzeichnenden Merkmale des Patentanspruches 1 gelöst.

Die Unteransprüche beinhalten vorteilhafte Weiterbildungen der Erfindung.

Hierzu werden bei den jeweiligen Anfahrvorgängen des Fahrzeugs und beim Schalten des Schaltgetriebes bei fahrendem Fahrzeug die Kupplungsarbeiten rechnergestützt ermittelt. Es werden dabei die Kupplungsarbeitswerte ermittelt, welche jeweils während einer bestimmten Zeitspanne innerhalb der Schlupfzeit bis zum vollständigen Kraftschluss der Kupplung verrichtet werden. Die Häufigkeit der ermittelten Kupplungsarbeitswerte wird in Kupplungsarbeitsklassen, welche für das Anfahren dem jeweils aktuellen Anfahrvorgang und für das Schalten dem jeweils aktuellen Schaltgang zugeordnet sind, gespeichert.

Beispielsweise bei hoher Beladung des Nutzfahrzeugs und/oder an großen Steigungen ergeben sich große Kupplungsarbeitswerte. Bei korrekter Kupplungs- und Schaltgetriebebedienung werden diese großen Kupplungsarbeitswerte in einem kleinen Anfahrgang, beispielsweise erster oder zweiter Anfahrgang, im Speicher abgelegt. Ergibt sich eine hohe Häufigkeit großer Kupplungsarbeitswerte in den höheren Anfahrgängen, beispielsweise dritten bis fünften Anfahrgang, ist dies ein Hinweis auf eine unkorrekte Bedienung.

Wenn bei Gangwechselvorgängen im Fahrbetrieb große Kupplungsarbeitswerte häufig vorkommen, deutet dies auf eine unkorrekte Fahrweise, insbesondere unkorrekte Wahl der Schaltgänge hin. Eine hohe Häufigkeit niedriger Kupplungsarbeitswerte bei Gangwechselvorgängen ist ein Hinweis auf korrekte Fahrweise.

Durch die erläuterte Klassierung der ermittelten Kupplungsarbeitswerte, abgelegt in einem nicht flüchtigen Speicher, lassen sich beim Auslesen, beispielsweise bei einem Kundendienstaufenthalt, Rückschlüsse auf eine korrekte oder nicht korrekte Fahrweise gewinnen. Bei nicht korrekter Fahrweise erhält man eine Begründung für eine zu kurze Standzeit bei vorzeitig verschlissener Kupplung. Die Erfindung liefert hierzu einen Hinweis auf die korrekte oder nicht korrekte Bedienung der Kupplung und/oder des Schaltgetriebes bei einem Handschaltgetriebe oder auf die korrekte oder nicht korrekte Gangwahl bei einem teilautomatisierten Schaltgetriebe, das den entsprechenden Verschleiß an der Kupplung zur Folge hat.

In vorteilhafter Weise kann die Erfindung bei Nutzfahrzeugen zum Einsatz kommen, welche mit den ohnehin in Nutzfahrzeugen vorhandenen Komponenten ausgerüstet sind.

Es handelt sich um folgende Komponenten:

- einen Fahrzeugmotor (Verbrennungsmotor) mit elektronischer Momentensteuerung;

- eine herkömmliche Kupplung;

- ein Schaltgetriebe (Handschaltgetriebe oder teilautomatisiertes Getriebe, bei dem der Anfahrgang vom Fahrzeugführer gewählt wird)

- einen Bordrechner (Fahrzeugführungsrechner).

Anhand der Figuren wird die Erfindung noch näher erläutert.

Es zeigt

Fig. 1 ein Blockschaltbild der für die Durchführung der Erfindung erforderlichen Komponenten eines Nutzfahrzeugs; und

Fig. 2 Häufigkeitsdiagramme der beim Anfahren ermittelten Kupplungsarbeitswerte.

Fig. 3 ein Häufigkeitsdiagramm von Kupplungsarbeitswerten bei Gangwechselvorgängen

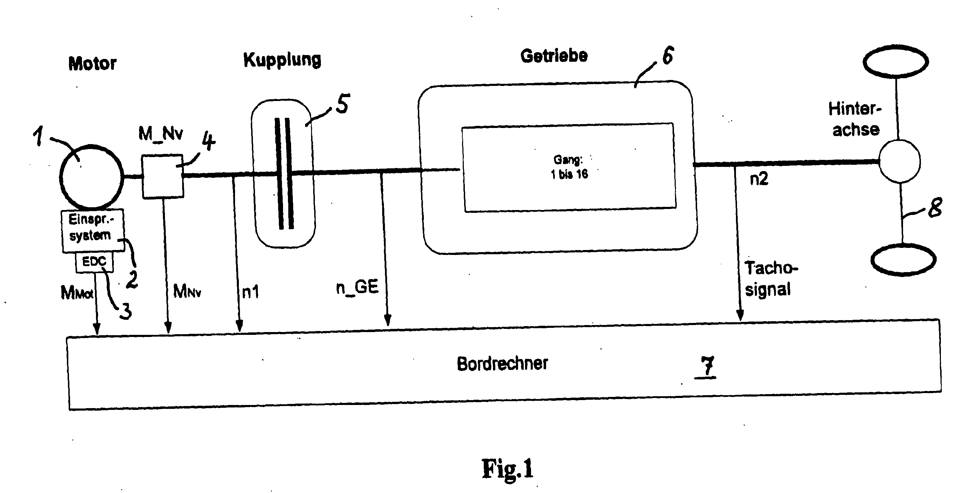

In der Fig. 1 ist ein Blockschaltbild eines Antriebsstrangs eines Nutzfahrzeugs dargestellt. Dieser beinhaltet einen Fahrzeugmotor (Dieselmotor) 1, dessen Motormoment mittels einer elektronischen Steuerung (EDC) 3 und dem jeweiligen Einspritzsystem 2 eingestellt wird. Das aktuelle Motormoment abzüglich eines in Abhängigkeit vom Fahrzeugtyp parametrierten, konstanten Momentes der Motor-Nebenverbraucher 4 wird in eine Kupplung 5 eingeleitet. Bei 100%-kraftschlüssiger Kupplung 5 wird das aktuelle Motormoment mit einer Drehzahl $n_{GE}$ in ein Schaltgetriebe 6, welches auf einen aktuellen Gang, beispielsweise Anfahrgang oder Schaltgang, eingestellt ist, eingeleitet. Mit einer entsprechenden Drehzahl n2 wird das Motormoment an die Hinterachse 8 des Nutzfahrzeugs gelegt.

Einem Bordrechner (Fahrzeugführungsrechner) 7 werden von den einzelnen Komponenten die zur Ermittlung der Kupplungsarbeitswerte erforderlichen Größen eingegeben. Es handelt sich hier um das aktuelle Motormoment $M_{Mot}$, welches aus der aktuellen Einspritzmenge des Einspritzsystems 2 berechnet und von der elektronischen Steuerung (EDC) 3 gesendet wird, weiterhin um das konstante Moment $M_{Nv}$ der Motor-Nebenverbraucher 4, um die in die Kupplung 5 eingeleitete Motordrehzahl n1, die Getriebeeingangsdrehzahl $n_{GE}$ und die Getriebeausgangsdrehzahl n2.

Die beim Anfahren des Fahrzeugs und bei einem Gangwechselvorgang des Schaltgetriebes von der Kupplung geleistete Arbeit (Kupplungsarbeit $W_{Kup}$) ergibt sich aus der Kupplungsleistung $P_{Kup}$, welche während einer bestimmten Zeitspanne t innerhalb der Schlupfzeit bis zum vollständigen Kraftschluss der Kupplung in der Kupplung verbraucht wird, gemäß folgender allgemeiner Formel:

$$W_{Kup} = P_{Kup} \bullet t$$

Die in der Kupplung verbrauchte Kupplungsleistung $P_{Kup}$ berechnet sich aus dem aktuellen, in die Kupplung eingeleiteten Kupplungsmoment $M_{Kup}$ und der Differenzdrehzahl $n_{dif}$ an der Kupplung 5, wobei das aktuelle Kupplungseingangsmoment $M_{Kup}$ die Differenz aus dem aktuellen Motormoment $M_{Mot}$ und dem konstanten Moment $M_{Nv}$ der Motornebenverbraucher 4 ist. Demgemäß ergibt sich die in der Kupplung 5 verbrauchte Kupplungsleistung nach folgender Gleichung:

$$P_{Kup} = (M_{Mot} - M_{Nv}) \bullet n_{dif,}$$

wobei

$$n_{dif} = n1 - n_{GE} .$$

Die bei den jeweiligen Anfahr- und Schaltvorgängen zu ermittelnden Kupplungsarbeitswerte $W_{Kup}$ werden im Bordrechner 7 somit nach folgender Gleichung berechnet:

$$W_{Kup} = (M_{Mot} - M_{Nv}) \bullet (n1 - n_{GE}) \bullet t$$

Bei der Ermittlung der Kupplungsarbeitswerte wird eine bestimmte Zeitspanne zugrundegelegt, während welcher die Kupplungsarbeit verrichtet wird. Diese Zeitspanne liegt innerhalb der Schlupfzeit und endet mit dem 100%-igen Kraftschluss der Kupplung, bei welchem $n_{dif} = 0$ ist. Die in die Kupplung 5 eingeleitete Motordrehzahl n1 ist dann gleich der von der Kupplung abgegebenen Getriebeeingangsdrehzahl $n_{GE}$ . Diese Zeitspanne beginnt innerhalb der Schlupfzeit dann, wenn ein bestimmter Prozentsatz des vom Fahrzeugmotor gelieferten Motormoments, bei dem ein Kupplungsverschleiß beginnt, von der Kupplung 5 aufgenommen wird. Der Beginn der Zeitspanne bzw. die Dauer der Zeitspanne kann in Abhängigkeit vom jeweiligen Fahrzeugtyp und Einsatzbereich des Fahrzeugs für die Anfahrvorgänge und für die Schaltvorgänge festgelegt werden. Die Berechnung der Kupplungsarbeitswerte erfolgt im Bordrechner in einem bestimmten Takt, beispielsweise einem 20 ms - Takt. Die in den jeweiligen Takten ermittelten Teilwerte der Kupplungsarbeit werden während der Zeitspanne t aufsummiert und ergeben den jeweiligen zu ermittelnden Kupplungsarbeitswert.

Die Ermittlung der jeweiligen Kupplungsarbeitswerte bei den Anfahrvorgängen beginnt bei stehendem Fahrzeug und eingelegtem Gang, wobei die Zeitspanne t, während welcher die verrichtete Kupplungsarbeit ermittelt wird, bei einem von der Kupplung 5 aufgenommenen Motormoment $M_{Kup}$ von beispielsweise 20% beginnt und bei 100%-igem Kraftschluss der Kupplung, d. h. beim Fahrbeginn des Fahrzeugs mit $n_{dif} = 0$ endet. Zu diesem Zeitpunkt bestimmt der Bordrechner 7 aus der Getriebeeingangsdrehzahl $n_{GE}$ und der Getriebeausgangsdrehzahl n2 den aktuellen Gang (Anfahrgang). Diesem Anfahrgang wird der aktuell berechnete Kupplungsarbeitswert zugeordnet und in einer diesem Anfahrgang zugeordneten Tabelle mit verschiedenen Kupplungsarbeitswerten im Speicher abgelegt. Der Speicher kann separat oder vorzugsweise im Bordrechner 7 vorgesehen sein.

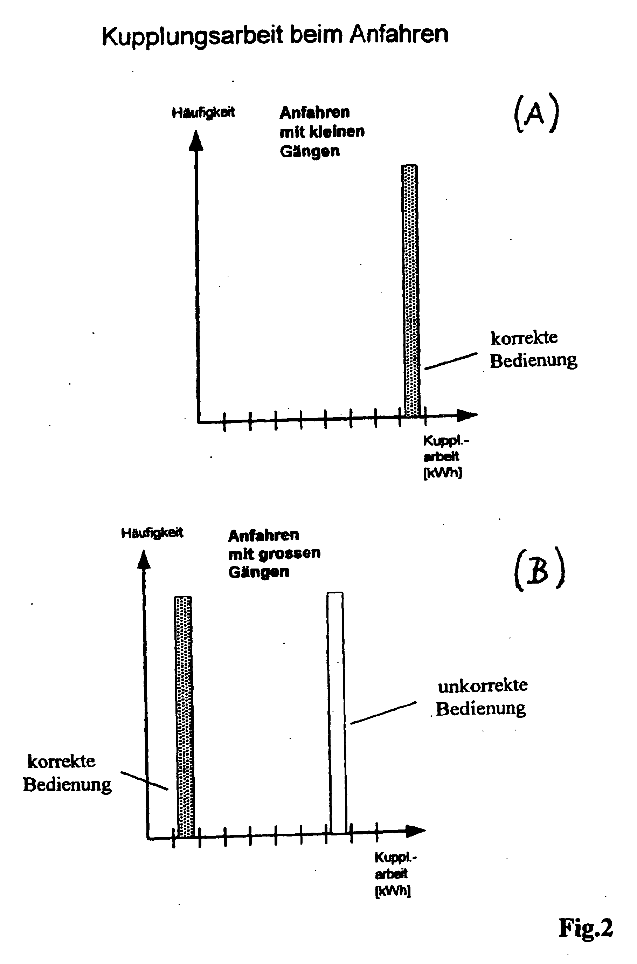

Wenn, wie aus Fig. 2 (A) ersichtlich, bei einem großen Kupplungsarbeitswert ein kleiner Anfahrgang, beispielsweise der erste oder zweite Anfahrgang, gewählt ist, wird dieser große Kupplungsarbeitswert bei den dafür vorgesehenen Werten, die im Diagramm auf der Abszisse aufgetragen sind, abgelegt. Wenn diese großen Kupplungsarbeitswerte mit großer Häufigkeit (Ordinate) in den den kleinen Anfahrgängen zugeordneten Gängen gespeichert werden, ist dies ein Indiz für eine korrekte Bedienung mit einem der normalen Standzeit entsprechenden Kupplungsverschleiß. Desgleichen ergibt sich eine Bedienung, wenn kleine Kupplungsarbeitswerte beim Anfahren höheren Anfahrgängen mit hoher Häufigkeit zugeordnet werden, wie es sich aus der graphischen Darstellung der Fig. 2 (B) ergibt. Wenn mit hoher Häufigkeit große Kupplungsarbeitswerte den großen Anfahrgängen zugeordnet sind, ist dies ein Indiz für Anfahrvorgänge in zu hohen Gängen.

Die Ermittlung der Kupplungsarbeitswerte bei Gangwechselvorgängen während des Fahrbetriebs beginnt bei einer niedrigen Fahrgeschwindigkeit, beispielsweise $v \geq 3$ km/h und einem Kupplungseingangsmoment $\geq 15$ % und einer ansteigenden Differenzdrehzahl $n_{dif}$. Bei vollständigem Kraftschluss ($n1 = n_{GE}$ bzw. $n_{dif} = 0$) wird vom Bordrechner 7 der eingelegte Gang aus $n_{GE}$ und n2 berechnet. Gegebenenfalls kann auch die beim Auskuppeln (ansteigende Differenzdrehzahl $n_{dif}$) verrichtete Kupplungsarbeit ermittelt werden.

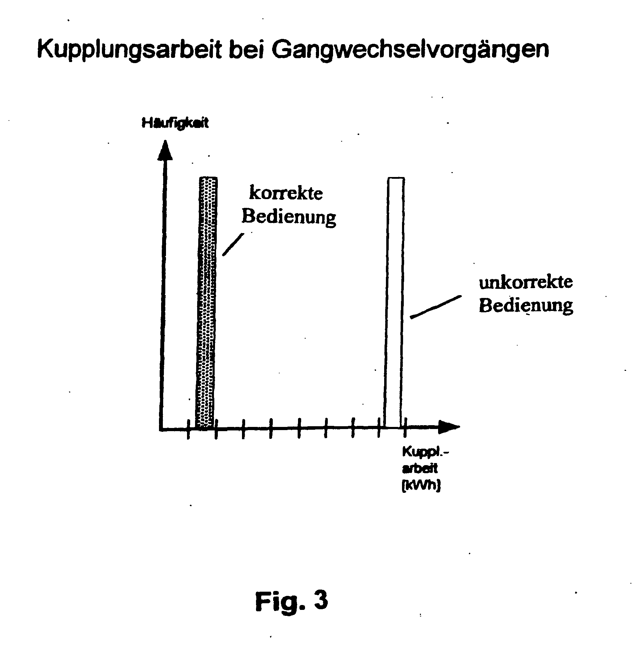

Die Kupplungsarbeitswerte sämtlicher Gangwechselvorgänge werden ebenfalls in einem nichtflüchtigen Speicher in den jeweiligen Schaltgängen zugeordneten Tabellen abgelegt, wie es in der Fig. 3 schematisch dargestellt ist.

Wenn in diesen Wechselvorgängen die Häufigkeit großer Kupplungsarbeitswerte hoch ist, ist dies ein Indiz für eine nicht korrekte Schaltvorgänge. Die Ursache für die unkorrekten Gangwechselvorgänge können eine vielfach nicht an die Fahrsituation angepasste Gangwahl sein. Wenn in den Gangwechselvorgängen die Häufigkeit kleiner Kupplungsarbeitswerte hoch ist, deutet dies auf eine korrekte Fahrweise, insbesondere bei der Wahl der Schaltgänge mit einem Kupplungsverschleiß innerhalb der normalen Standzeit hin.

**Bezugszeichenliste**

1   Fahrzeugmotor (Dieselmotor)

2   Einspritzsystem

3   elektronische Momentensteuerung (EDC)

4   Motor-Nebenverbraucher

5   Kupplung des Schaltgetriebes

6   Schaltgetriebe

7   Bordrechner (Fahrzeugführungsrechner)

8   Hinterachse

**Patentansprüche**

1.   Verfahren zur Begründung des Verschleißes einer Reibungskupplung zwischen einem Verbrennungsmotor und einem Handschaltgetriebe oder teilautomatisiertem Getriebe in einem Nutzfahrzeug, **dadurch gekennzeichnet, dass** beim Anfahren des Fahrzeugs und beim Gangwechsel im Fahrbetrieb die Kupplungsarbeiten, welche jeweils während einer bestimmten Zeitspanne innerhalb der Schlupfzeit bis zum vollständigem Kraftschluss der Kupplung verrichtet werden, rechnergestützt ermittelt werden und dass die Häufigkeit der ermittelten Kupplungsarbeitswerte in Kupplungsarbeitsklassen, welche für das Anfahren dem jeweils aktuellen Anfahrgang und für Gangwechselvorgänge dem jeweils neu eingelegten Schaltgang zugeordnet sind, gespeichert wird.

2.   Verfahren nach Anspruch 1, **dadurch gekennzeichnet, dass** die Zeitspanne, während welcher der jeweils verrichtete Kupplungsarbeitswert ermittelt wird, dann beginnt, wenn ein einen Kupplungsverschleiß verursachender Prozentsatz des vom Fahrzeugmotor gelieferten Motormoments von der Kupplung aufgenommen wird.

3.   Verfahren nach Anspruch 1 oder 2, **dadurch gekennzeichnet, dass** der jeweilige Kupplungsarbeitswert ($W_{Kup}$) gemäß folgender Gleichung ermittelt wird:

$$W_{Kup} = (M_{Mot} - M_{Nv}) \bullet (n1 - n_{GE}) \bullet t,$$

wobei

$M_{Mot}$ aktuelles Motormoment;
$M_{Nv}$ konstantes Moment der Motor-Nebenverbraucher;
$n1$ Motordrehzahl;
$n_{GE}$ Getriebeeingangsdrehzahl; und
$t$ Zeitspanne der verrichteten Kupplungsarbeit bedeuten

4.   Verfahren nach einem der Ansprüche 1 bis 3, **dadurch gekennzeichnet, dass** die Kupplungsarbeitswerte beim Anfahren und beim Schalten vom Bordrechner des Fahrzeugs in einen 20 ms-Takt berechnet werden.

5.   Verfahren nach einem der Ansprüche 1 bis 4, **dadurch gekennzeichnet, dass** die gespeicherten Kupplungsarbeitswerte, welche in den Anfahrgängen und in Gangwechselvorgängen zugeordneten Kupplungsarbeitsklassen gespeichert sind, aus dem Speicher, insbesondere zu Kundendienstzwecken, ausgelesen werden können.

**Claims**

1. Procedure for establishing the wear in a frictional clutch between an internal combustion engine and a manual gearbox or semi-automated gearbox in a commercial vehicle, **characterised in that** during the moving off of the vehicle and during gearchanges in driving operation the clutch work expended during a certain period of time within the slip time until positive clutch engagement is completely established is ascertained with the aid of a computer and that the frequency of the ascertained clutch work values is saved in clutch work classes allocated to the respective moving-off gear for moving-off operations and to each new gear engagement for gearshifting operations.

2. Procedure according to Claim 1, **characterised in that** the time span during which the value of clutch work expended in each case is ascertained starts when a percentage of engine torque supplied by the vehicle's engine and causing clutch wear is taken up by the clutch.

3. Procedure according to Claim 1 or 2, **characterised in that** the respective clutch work value ($W_{Kup}$) is ascertained according to the following equation:

$$W_{Kup} = (M_{Motup} - M_{Nv}) \cdot (n1 - n_{GE}) \cdot t,$$

the abbreviations having the following meanings:

$M_{Mot}$ current engine torque;
$M_{Nv}$ constant torque of engine secondary consumers;
n1 engine speed
$n_{GE}$ gearbox input speed and
t time span expended for clutch work

4. Procedure according to one of the Claims 1 to 3, **characterised in that** during moving-off and gearshifting operations the clutch work values are calculated by the onboard computer at intervals of 20 ms.

5. Procedure according to one of the Claims 1 to 4, **characterised in that** the saved clutch work values saved in the clutch work classes allocated to the moving-off gears and gear-changing operations can be read out of the memory, particularly for customer service purposes.

**Revendications**

1. Procédé permettant de prouver l'usure d'un embrayage à friction entre un moteur à combustion interne et une boîte de vitesses manuelle ou semi-automatisée dans un véhicule industriel, **caractérisé en ce qu'**au démarrage du véhicule et lors des changements de vitesse en marche, les mouvements de l'embrayage accomplis à chaque fois pendant une certaine plage de temps au cours du temps de patinage jusqu'à l'adhérence totale de l'embrayage sont déterminés par ordinateur et **en ce que** la fréquence des valeurs de travail relevées de l'embrayage est enregistrée par catégories de travail de l'embrayage affectées au rapport de démarrage momentané au démarrage et au rapport venant d'être engagé à chaque passage de vitesse.

2. Procédé selon la revendication 1, **caractérisé en ce que** la plage de temps pendant laquelle est déterminée la valeur du travail d'embrayage accompli commence lorsqu'un taux de pourcentage causant l'usure de l'embrayage du couple moteur délivré par le moteur du véhicule est enregistré par l'embrayage.

3. Procédé selon la revendication 1 ou 2, **caractérisé en ce que** chaque valeur de travail de l'embrayage ($V_{embr}$) est déterminée selon l'équation suivante :

$$V_{embr} = (M_{Mot} - M_{NV}) \, x \, (n1 - n_{GE}) \, x \, t,$$

auquel cas les abréviations suivantes signifient

$M_{Mot}$ Couple moteur momentané
$M_{NV}$ Couple constant des consommateurs auxiliaires du moteur
n1 Régime moteur
$n_{GE}$ Régime à l'entrée de la boîte de vitesses et
t Plage de temps du travail de l'embrayage accompli

4. Procédé selon l'une quelconque des revendications 1 à 3, **caractérisé en ce que** les valeurs de travail de l'embrayage sont calculées par l'ordinateur de bord du véhicule au démarrage et lors des changements de vitesse à une fréquence de 20 ms.

5. Procédé selon l'une quelconque des revendications 1 à 4, **caractérisé en ce que** les valeurs enregistrées de travail de l'embrayage, qui sont enregistrées dans les catégories de travail de l'embrayage affectées en rapports de démarrage et en passages de rapports, peuvent être lues à partir de la mémoire, en particulier à des fins de service client.

**Fig.1**

Motor  Kupplung  Getriebe  6

$M\_Nv$ 4  5

1  Hinter-achse

Einspr.-system  Gang: 1 bis 16  $n2$

EDC  8

$M_{Mot}$ $M_{Nv}$ $n1$ $n\_GE$ Tacho-signal

2 3

Bordrechner  7

EP 1 482 196 B1

# Kupplungsarbeit beim Anfahren

Häufigkeit

Anfahren
mit kleinen
Gängen

(A)

korrekte
Bedienung

Kuppl.-
arbeit
[kWh]

Häufigkeit

Anfahren
mit grossen
Gängen

(B)

unkorrekte
Bedienung

korrekte
Bedienung

Kuppl.-
arbeit
[kWh]

**Fig.2**

# Kupplungsarbeit bei Gangwechselvorgängen

**Fig. 3**